# FASCICULE DE BREVET EUROPEEN

(11) **EP 1 219 873 B1**
(45) Date de publication et mention de la délivrance du brevet: **15.03.2006**
(21) Numéro de dépôt: 01403378.1
(22) Date de dépôt: 27.12.2001
(51) Int. Cl.: F16K 1/46

(54) **Clapet à joint serti et procédé de fabrication d'un tel clapet**
Eingepresste Ventildichtung und Herstellungsverfahren für dieselbe
Crimped valve seal and manufacturing process for such a valve

(30) Priorité: 29.12.2000 FR 0017313
(43) Date de publication de la demande: 03.07.2002
(73) Titulaire: VERNET S.A., 91291 Arpajon Cédex (FR)
(72) Inventeur: Bouloy, Alain, 91580 Etrechy (FR); Mabboux, Lionel, 91700 Sainte Genevieve des Bois (FR); Chamot, Jean, 91290 Arpajon (FR)
(74) Mandataire: Jacobson, Claude

(56) Documents cités:
- EP-A- 0 708 279
- EP-A- 0 908 809
- DE-U- 9 100 356
- US-A- 3 831 900
- US-A- 5 603 485
- PATENT ABSTRACTS OF JAPAN vol. 005, no. 029 (M-056), 21 février 1981 (1981-02-21) & JP 55 155978 A (NIPPON THERMOSTAT KK), 4 décembre 1980 (1980-12-04)

## Description

L'invention concerne les clapets pour soupape destinés à coopérer avec un siège annulaire, comprenant une armature annulaire présentant des parties coudées définissant un canal annulaire, et un joint annulaire logé partiellement dans le canal et adapté pour venir en contact étanche contre le siège quand le clapet est en position de fermeture. Elle concerne également un procédé de fabrication d'un tel clapet.

Le document US-A-5 603 485 décrit un dispositif conforme au préambule de la revendication 1.

On connaît en particulier, notamment par le document JP A 61 59070, des clapets de ce type dans lesquels l'armature comporte, pour border extérieurement le canal annulaire, une paroi mince de plus faible hauteur que le joint, dont on plie la région proche du chant libre vers l'intérieur du canal annulaire, de telle manière que l'arête intérieure entre cette région et le chant comprime ou/et pénètre dans la matière du joint et que le serrage du joint entre cette arête et les parois du canal de l'armature provoque le sertissage du joint dans le canal.

Cette technique a pour inconvénient de fragiliser le joint le long de sa circonférence comprimée par l'arête entre le chant libre de la paroi mince de l'armature et la région proche de ce chant, car même si initialement cette arête ne pénètre pas dans la matière du joint, la répétition des impacts du joint contre son siège et le vieillissement de la matière du joint provoquent une telle pénétration et une amorce de déchirure le long de cette circonférence, pouvant conduire à une destruction du joint.

L'invention a pour but de remédier à cet inconvénient des clapets pour soupapes destinés à coopérer avec un siège annulaire, comprenant une armature annulaire présentant des parties coudées définissant un canal annulaire, et un joint annulaire logé partiellement dans ce canal et adapté pour venir en contact étanche contre le siège quand le clapet est en position de fermeture, et qui sont sertis par compression ou/et pénétration de la matière du joint par une arête d'une paroi de l'armature bordant le canal annulaire dans lequel le joint est partiellement logé.

A cette fin, l'invention concerne un clapet pour soupape adapté pour coopérer avec un siège annulaire, comprenant une armature annulaire constituée par une tôle dont des parties pliées définissent un canal annulaire, et un joint annulaire logé partiellement dans ce canal, cette tôle s'étendant, autour d'un axe central, depuis un chant d'où part une paroi intérieure formant col adapté pour être enfilé autour d'un élément mobile de soupape jusqu'à un autre chant auquel aboutit une paroi extérieure bordant le canal annulaire et convergeant, en allant en direction de cet autre chant, de manière inclinée vers l'axe central, caractérisé en ce que le joint est un joint moulé en matière synthétique présentant une surface extérieure comportant, en l'absence de contrainte exercée sur elle, une région s'étendant, en s'éloignant du fond du canal, vers l'axe central de manière inclinée, prolongée par une région s'écartant de l'axe central de manière inclinée, et en ce que la paroi extérieure de l'armature épouse, sans pénétrer dans la matière du joint et sans exercer de contrainte sur celle-ci mais au moyen d'un ajustement sans serrage, la forme d'au moins une partie de ladite région s'étendant vers l'axe central, du joint d'étanchéité.

Grâce à cette structure, la fabrication du clapet reste très économique et la fiabilité du joint est notablement accrue.

Le clapet peut en outre présenter une ou plusieurs des caractéristiques suivantes :
- le joint comporte une surface de base raccordée à la surface extérieure par une zone arrondie, et l'armature comporte des tronçons cylindriques ou approximativement cylindriques et des couronnes circulaires de liaison comprenant, depuis un premier chant, un tronçon constituant la paroi intérieure de l'armature, un tronçon s'étendant en sens inverse de la paroi intérieure de l'armature pour constituer une paroi intérieure du canal, et une couronne circulaire s'étendant extérieurement au tronçon constituant la paroi intérieure du canal, pour constituer le fond du canal, la paroi extérieure du canal étant raccordée à la couronne par un congé épousant la forme de ladite zone arrondie du joint ;
- l'armature, comporte depuis un chant, un premier tronçon approximativement cylindrique constituant la paroi intérieure de l'armature formant col, et une première couronne circulaire d'épaulement s'étendant extérieurement au premier tronçon dans un plan perpendiculaire à l'axe central pour y relier un deuxième tronçon cylindrique s'étendant dans le même sens que le premier tronçon, le raccordement des tronçons à la couronne étant assuré par des congés ;
- l'armature comporte un chant dont approximativement la totalité de la surface épouse la forme d'une partie d'une région s'écartant de l'axe central de manière inclinée, de la surface extérieure du joint, en l'absence de contrainte exercée sur cette surface extérieure ;
- le joint comporte une région s'étendant vers l'axe central de manière inclinée et se raccordant à une surface d'extrémité libre du joint opposée à une surface de base de celui-ci en contact contre une couronne circulaire de l'armature, tronconiquement en l'absence de contrainte exercée sur la surface extérieure du joint ; et
- la région s'étendant, en s'éloignant du fond du canal, vers l'axe central de manière inclinée, comporte au moins une partie tronconique dont l'angle au sommet du tronc de cône, en l'absence de contrainte exercée sur elle, est environ 60 degrés.

L'invention concerne également un procédé de fabrication de clapet, caractérisé en ce que l'on dispose dans une armature en tôle comportant un canal annulaire bordé par une paroi extérieure approximativement cylindrique, un joint moulé en matière synthétique présentant une surface extérieure comportant, en l'absence de contrainte exercée sur elle, une région s'étendant, en s'éloignant du fond du canal, vers l'axe central de manière inclinée, prolongée par une région s'écartant de l'axe central de manière inclinée, on effectue un sertissage de la paroi extérieure sur la région s'étendant vers l'axe central de manière inclinée en la rabattant progressivement vers celle-ci, et on arrête de rabattre la paroi extérieure lorsqu'elle épouse la forme de la région s'étendant vers l'axe central de manière inclinée, avant qu'elle exerce une contrainte sur cette région.

Grâce à ce procédé, il est possible d'obtenir une grande précision dans la déformation de la paroi extérieure du canal annulaire.et d'éviter tout serrage du joint par cette paroi extérieure.

Le procédé peut en outre présenter la caractéristique suivante :
- pour rabattre la paroi extérieure sur la région s'étendant vers l'axe central de manière inclinée, on effectue un sertissage gyroscopique de la paroi extérieure sur cette région.

D'autres caractéristiques et avantages de l'invention ressortiront de la description qui va suivre, d'une forme et d'un mode de réalisation de l'invention donnés à titre d'exemples non limitatifs, illustrés par les dessins joints dans lesquels :
- la figure 1 est une section transversale d'une armature entrant dans la construction d'un clapet selon l'invention, avant l'insertion d'un joint d'étanchéité,
- la figure 2 est une section transversale d'un joint d'étanchéité entrant dans la construction d'un clapet selon l'invention,
- la figure 3 est une section transversale d'un clapet selon l'invention.

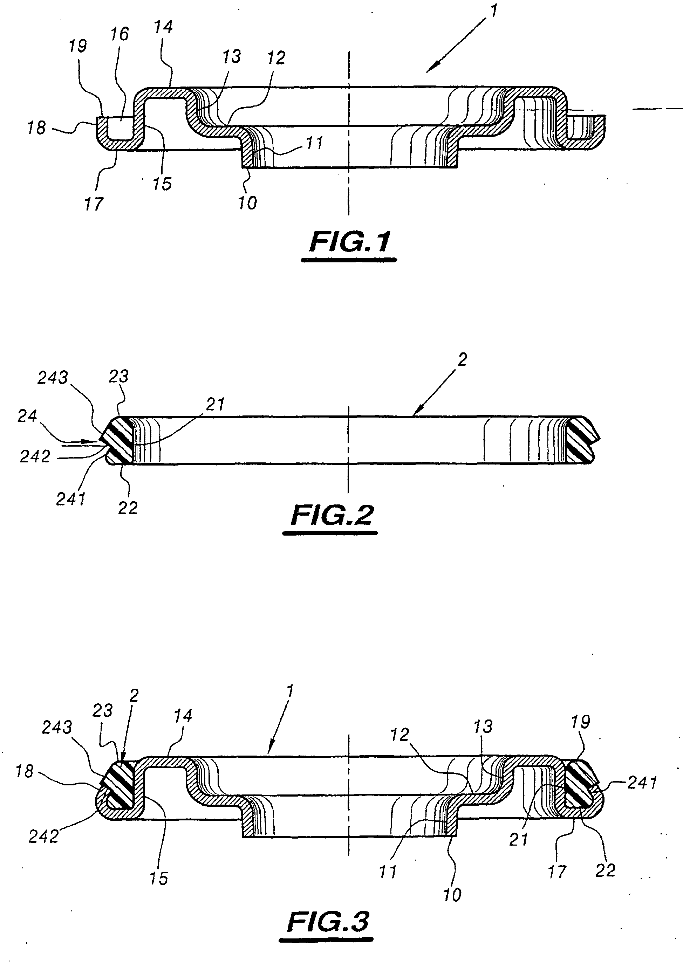

Le clapet selon l'invention, adapté pour coopérer avec un siège annulaire, comprend une armature 1 métallique elle-même de forme annulaire constituée d'une tôle tubulaire mise en forme par un quelconque procédé de pliage connu pour parvenir tout d'abord à la configuration représentée sur la figure 1.

L'armature 1 est constituée de tronçons cylindriques ou approximativement cylindriques à section droite circulaire s'étendant coaxialement autour d'un axe central, reliés par des couronnes circulaires s'étendant dans des plans perpendiculaires à cet axe central. Les raccordements des tronçons cylindriques et des couronnes circulaires ne sont pas à arête vive, mais sont assurés par un congé dont le rayon est de quelques dixièmes de millimètre.

Partant d'un premier chant d'extrémité 10 de l'armature, un tronçon approximativement cylindrique 11 de plus petit diamètre constituant la paroi intérieure de l'armature forme un col adapté pour être enfilé autour du corps de forme générale cylindrique d'un élément mobile de soupape, par exemple d'un élément thermostatique à cire.

Généralement, un tel élément mobile de soupape comporte une collerette pour faciliter la solidarisation du clapet, et ainsi l'armature comporte une première couronne circulaire d'épaulement 12 s'étendant extérieurement au premier tronçon approximativement cylindrique pour y relier un deuxième tronçon cylindrique 13 de plus grand diamètre adapté pour être enfilé autour de la collerette de l'élément mobile de soupape et s'étendant, en prenant comme origine le chant 10, dans le même sens que le premier tronçon approximativement cylindrique 11.

Au deuxième tronçon cylindrique 13, est relié, par l'intermédiaire d'une deuxième couronne circulaire d'épaulement 14 s'étendant extérieurement à lui, un troisième tronçon cylindrique 15 replié de manière à s'étendre en sens inverse du premier et du deuxième tronçon pour constituer une paroi intérieure d'un canal annulaire 16 adapté pour loger partiellement un joint d'étanchéité 2 qui sera décrit par la suite.

Une troisième couronne circulaire 17 s'étendant extérieurement au troisième tronçon cylindrique 15, constitue le fond du canal annulaire 16, et relie au troisième tronçon, un quatrième tronçon cylindrique 18 s'étendant dans le même sens que le premier et le deuxième tronçon, c'est-à-dire en sens inverse du troisième tronçon 15, pour constituer la paroi extérieure du canal 16.

La troisième- couronne circulaire 17 s'étend dans un plan perpendiculaire à l'axe central situé entre le plan du premier chant d'extrémité 10 et celui de la première couronne circulaire 12.

Le quatrième tronçon cylindrique 18 aboutit au deuxième chant d'extrémité 19 de l'armature, s'étendant dans un plan perpendiculaire à l'axe central situé entre le plan de la première couronne 12 et celui de la deuxième couronne 14.

Le joint d'étanchéité 2 est une pièce annulaire en matière synthétique moulée comportant, autour d'un axe central, une surface intérieure 21 cylindrique adaptée pour venir en contact contre le troisième tronçon cylindrique 15 constituant la paroi intérieure du canal 16, une surface de base 22 s'étendant en couronne circulaire perpendiculairement à l'axe central autour de la surface intérieure 21 et adaptée pour venir en contact contre la troisième couronne circulaire 17 de l'armature constituant le fond du canal 16, une surface d'extrémité libre 23 s'étendant ici en couronne bombée autour de la surface intérieure 21, et une surface extérieure 24 présentant un profil en ligne brisée qui sera décrit dans la suite.

La surface d'extrémité libre bombée 23 est raccordée à la surface intérieure 21 et à la surface extérieure 24 tangentiellement tandis que la surface de base plane 22 est raccordée à la surface intérieure et à la surface extérieure par des zones arrondies présentant des rayons respectifs de quelques dixièmes de millimètre afin que les congés de raccordement de l'armature 1 épousent parfaitement les formes du joint 2 sans serrage.

La surface extérieure 24 comporte, en l'absence de toute contrainte exercée sur elle, en s'éloignant de la surface de base 22 adaptée pour venir en contact contre le fond du canal 16 et en partant de sa zone arrondie de raccordement, une région 241 s'étendant vers l'axe central de manière inclinée, une deuxième région 242 s'écartant de l'axe central de manière inclinée, et une troisième région 243 s'étendant vers l'axe central de manière inclinée. La première région tronconique 241 se raccorde tangentiellement au rayon de raccordement à la surface de base 22, tandis que la deuxième région tronconique 242 se raccorde à la première région 241 à angle vif par un angle droit s'ouvrant vers l'extérieur du joint 2, et que la troisième région tronconique 243 se raccorde à la deuxième région 242 à angle vif par un angle droit s'ouvrant vers l'intérieur sur la matière du joint ; comme on l'a vu, la troisième région 243 se raccorde à la surface libre 23 ici tangentiellement, et l'angle au sommet du tronc de cône formé par cette troisième région 243 tronconique est égal à celui du siège tronconique avec lequel le joint est destiné à coopérer, ici à 60° comme l'angle au sommet du tronc de cône formé par la première région 241 ou celui de cette première région 24-1 avec la surface de base 22.

Pour constituer le clapet à partir de l'armature 1 et du joint 2 qui viennent d'être décrits, on dispose le joint 2 dans le canal 16 de l'armature , puis on rabat le quatrième tronçon cylindrique 18 de l'armature constituant ta paroi extérieure du canal 16, pour le faire converger, en allant dans la direction du deuxième chant 19, de manière inclinée vers l'axe central et ainsi lui faire épouser, sans pénétrer dans la matière du joint 2 et sans exercer de contrainte sur celui-ci mais au moyen d'un ajustement sans serrage, la forme de la première région 241 de la surface extérieure 24 du joint s'étendant vers l'axe central de manière inclinée, tandis que le congé raccordant le quatrième tronçon 18 convergeant alors vers l'axe central à la couronne 17 de fond du canal épouse la forme de la zone arrondie du joint raccordant la surface extérieure 24 de celui-ci à sa surface de base 22. Les dimensions respectives du quatrième tronçon 18 de l'armature et de la première région 241 de la surface extérieure du joint sont choisies de telle manière que lorsque le quatrième tronçon 18 de l'armature épouse la forme de la première région 241 de la surface extérieure 24 du joint, approximativement la totalité de la surface du deuxième chant 19 de l'armature vient épouser la forme d'une partie de la deuxième région 242 de la surface extérieure 24 du joint s'écartant de l'axe central de manière inclinée, également sans pénétrer dans la matière du joint mais au moyen d'un ajustement sans serrage. La hauteur du joint 2 est ici approximativement égale ou légèrement inférieure à la hauteur du troisième tronçon 15 mesurée à l'intérieur du canal 16 afin que le joint soit approximativement de niveau ou légèrement en retrait par rapport à la deuxième couronne circulaire 14 de l'armature 1.

Le sertissage du joint 2 dans le canal 16 de l'armature 1, consistant à rabattre le quatrième tronçon 18 de l'armature pour le faire converger vers l'axe central, est réalisé au moyen d'une opération connue dans la technique sous le nom de « sertissage gyroscopique » ou « sertissage tournant », et non au moyen de frappes sur le quatrième tronçon ; grâce au fait que l'on effectue un sertissage gyroscopique, on sertit l'armature sur le joint de manière très progressive, par exemple avec une progression de l'ordre du centième de millimètre par tour d'armature ; ainsi, le quatrième tronçon 18 de l'armature peut être positionné de façon très précise en retrait par rapport à la surface d'étanchéité du joint constituée par la troisième région 243 de la surface extérieure 24 du joint 2 et peut servir de sécurité en cas d'usure anormale du joint (étanchéité de secours).

Grâce au fait que le bord extérieur 18 du canal 16 épouse simplement la forme du joint 2 sans déformation, ni contrainte, ni serrage de celui-ci, la fiabilité du joint est notablement accrue.

## Revendications

1. Clapet pour soupape adapté pour coopérer avec un siège annulaire, comprenant une armature (1) annulaire constituée par une tôle dont des parties pliées définissent un canal (16) annulaire, et un joint (2) annulaire logé partiellement dans ce canal, cette tôle s'étendant, autour d'un axe central, depuis un chant (10) d'où part une paroi intérieure (11) formant col adapté pour être enfilé autour d'un élément mobile de soupape jusqu'à un autre chant (19) auquel aboutit une paroi extérieure (18) bordant le canal annulaire (16) et convergeant, en allant en direction de cet autre chant, de manière inclinée vers l'axe central, **caractérisé en ce que** le joint (2) est un joint moulé en matière synthétique présentant une surface extérieure (24) comportant, en l'absence de contrainte exercée sur elle, une région (241) s'étendant, en s'éloignant du fond du canal (16), vers l'axe central de manière inclinée, prolongée par une région (242) s'écartant de l'axe central de manière inclinée, et **en ce que** la paroi extérieure de l'armature (1) épouse, sans pénétrer dans la matière du joint et sans exercer de contrainte sur celle-ci mais au moyen d'un ajustement sans serrage, la forme d'au moins une partie de ladite région (241) s'étendant vers l'axe central, du joint d'étanchéité (2).

2. Clapet selon la revendication 1, **caractérisé en ce que** le joint (2) comporte une surface de base (22) raccordée à la surface extérieure (24) par une zone arrondie, et l'armature (1) comporte des tronçons cylindriques ou approximativement cylindriques et des couronnes circulaires de liaison comprenant, depuis un premier chant (10), un tronçon (11) constituant la paroi intérieure de l'armature, un tronçon (15) s'étendant en sens inverse de la paroi intérieure de l'armature pour constituer une paroi intérieure du canal (16), et une couronne circulaire (17) s'étendant extérieurement au tronçon (15) constituant la paroi intérieure du canal, pour constituer le fond du canal, la paroi extérieure (18) du canal étant raccordée à la couronne (17) par un congé épousant la forme de ladite zone arrondie du joint.

3. Clapet selon l'une quelconque des revendications 1 et 2, **caractérisé en ce que** l'armature (1), comporte depuis un chant (10), un premier tronçon (11) approximativement cylindrique constituant la paroi intérieure (11) de l'armature formant col, et une première couronne circulaire d'épaulement (12) s'étendant extérieurement au premier tronçon dans un plan perpendiculaire à l'axe central pour y relier un deuxième tronçon cylindrique (13) s'étendant dans le même sens que le premier tronçon, le raccordement des tronçons à la couronne étant assuré par des congés.

4. Clapet selon l'une quelconque des revendications 1 à 3, **caractérisé en ce que** l'armature (1) comporte un chant (19) dont approximativement la totalité de la surface épouse la forme d'une partie d'une région (242) s'écartant de l'axe central de manière inclinée, de la surface extérieure (24) du joint (2), en l'absence de contrainte exercée sur cette surface extérieure.

5. Clapet selon l'une quelconque des revendications 1 à 4, **caractérisé en ce que** le joint (2) comporte une région (243) s'étendant vers l'axe central de manière inclinée et se raccordant à une surface d'extrémité libre (23) du joint opposée à une surface de base (22) de celui-ci en contact contre une couronne circulaire (17) de l'armature, tronconiquement, en l'absence de contrainte exercée sur la surface extérieure (24) du joint.

6. Clapet selon l'une quelconque des revendications 1 à 5, **caractérisé en ce que** la région (241) s'étendant, en s'éloignant du fond du canal (16), vers l'axe central de manière inclinée, comporte au moins une partie tronconique dont l'angle au sommet du tronc de cône, en l'absence de contrainte exercée sur elle, est environ 60 degrés.

7. Procédé de fabrication de clapet, **caractérisé en ce que** l'on dispose dans une armature (1) en tôle comportant un canal annulaire (16) bordé par une paroi extérieure (18) approximativement cylindrique, un joint (2) moulé en matière synthétique présentant une surface extérieure (24) comportant, en l'absence de contrainte exercée sur elle, une région (241) s'étendant, en s'éloignant du fond du canal (16), vers l'axe central de manière inclinée, prolongée par une région (242) s'écartant de l'axe central de manière inclinée, on effectue un sertissage de la paroi extérieure (18) sur la région (241) s'étendant vers l'axe central de manière inclinée en la rabattant progressivement vers celle-ci , et on arrête de rabattre la paroi extérieure (18) lorsqu'elle épouse la forme de la région (241) s'étendant vers l'axe central de manière inclinée, avant qu'elle exerce une contrainte sur cette région (241).

8. Procédé selon la revendication 7, **caractérisé en ce que**, pour rabattre la paroi extérieure (18) sur la région (241) s'étendant vers l'axe central de manière inclinée, on effectue un sertissage gyroscopique de la paroi extérieure (18) sur cette région (241).

## Patentansprüche

1. Ventilklappe, so ausgebildet, dass sie mit einem ringförmigen Sitz zusammenwirkt, umfassend eine ringförmige Armatur (1), die aus einem Blech mit gebogenen Teilen besteht, die einen ringförmigen Kanal (16) definieren, und eine ringförmige Dichtung (2), die teilweise in diesem Kanal angeordnet ist, wobei sich dieses Blech um eine Mittelachse herum von einer Kante (10), an der eine Innenwand (11) beginnt, die einen Kragen bildet, der so ausgebildet ist, dass er um ein bewegliches Ventilteil gelegt werden kann, sich bis hin zu einer anderen Kante (19) erstreckt, an der eine Außenwand (18) endet, die den ringförmigen Kanal (16) säumt und schräg in Richtung dieser anderen Kante auf die Mittelachse zuläuft, **dadurch gekennzeichnet, dass** die Dichtung (2) ein Kunststoffformteil ist, das eine Außenfläche (24) hat, die, wenn kein Druck auf sie ausgeübt wird, einen Bereich (241) aufweist, der sich vom Boden des Kanals (16) weg schräg zur Mittelachse hin erstreckt und von einem Bereich (242) fortgesetzt wird, der sich schräg von der Mittelachse entfernt, und dass sich die Außenwand der Armatur (1) der Form von wenigstens einem Teil des Bereichs (241) der Dichtung (2), der sich zur Mittelachse hin erstreckt, anpasst, ohne in das Material der Dichtung einzudringen und ohne Druck auf dieses auszuüben, sondern indem sie ohne Andrücken eingepasst wird.

2. Ventilklappe gemäß Anspruch 1, **dadurch gekennzeichnet, dass** die Dichtung (2) eine Grundfläche (22) aufweist, die mit der Außenfläche (24) durch einen runden Bereich verbunden ist, und die Armatur (1) zylinderförmige oder annähernd zylinderförmige Abschnitte und kreisförmige Verbindungskränze aufweist, die ab einer ersten Kante (10) einen Abschnitt (11) umfassen, der die Innenwand der Armatur bildet, sowie einen Abschnitt (15), der sich in Gegenrichtung zur Innenwand der Armatur erstreckt und somit eine Innenwand des Kanals (16) bildet, und einen kreisförmigen Kranz (17), der außerhalb des Abschnitts (15), der die Innenwand des Kanals darstellt, verläuft und somit den Boden des Kanals bildet, wobei die Außenwand (18) des Kanals mittels einer Ausrundung, die der Form des runden Bereichs der Dichtung entspricht, mit dem Kranz (17) verbunden ist.

3. Ventilklappe nach einem der Ansprüche 1 und 2, **dadurch gekennzeichnet, dass** die Armatur (1) ab einer Kante (10) einen ersten, ungefähr zylinderförmigen Abschnitt (11) aufweist, der die Innenwand (11) der Armatur darstellt, die einen Kragen bildet, sowie einen ersten kreisförmigen schulterartigen Kranz (12), der außerhalb des ersten Abschnitts in einer Ebene verläuft, die sich senkrecht zur Mittelachse erstreckt, um dort an einen zweiten zylinderförmigen Abschnitt (13) anzuschließen, der sich in die gleiche Richtung wie der erste Abschnitt erstreckt, wobei die Verbindung der Abschnitte mit dem Kranz durch Ausrundungen gesichert ist.

4. Ventilklappe nach einem der Ansprüche 1 bis 3, **dadurch gekennzeichnet, dass** die Armatur (1) eine Kante (19) aufweist, von der ungefähr die gesamte Oberfläche der Form eines Teils eines sich schräg von der Mittelachse entfernenden Bereichs (242) der Außenfläche (24) der Dichtung (2) entspricht, wenn auf diese Außenfläche kein Druck ausgeübt wird.

5. Ventilklappe nach einem der Ansprüche 1 bis 4, **dadurch gekennzeichnet, dass** die Dichtung (2) einen Bereich (243) aufweist, der sich schräg zur Mittelachse hin erstreckt und sich kegelstumpfartig an eine freie Endfläche (23) der Dichtung anschließt, die sich gegenüber einer Grundfläche (22) der Dichtung befindet, die einen kreisförmigen Kranz (17) der Armatur berührt, wenn auf die Außenfläche (24) der Dichtung kein Druck ausgeübt wird.

6. Ventilklappe nach einem der Ansprüche 1 bis 5, **dadurch gekennzeichnet, dass** der Bereich (241), der sich vom Boden des Kanals (16) weg schräg zur Mittelachse hin erstreckt, wenigstens einen kegelstumpfartigen Teil aufweist, dessen Winkel an der Spitze des Kegelstumpfs ungefähr 60 Grad beträgt, wenn auf den Bereich kein Druck ausgeübt wird.

7. Verfahren zur Herstellung einer Ventilklappe, **dadurch gekennzeichnet, dass** man in einer Armatur (1) aus Blech mit einem ringförmigen Kanal (16), der von einer ungefähr zylinderförmigen Außenwand (18) gesäumt wird, eine als Kunststoffformteil ausgeführte Dichtung (2) anordnet, die eine Außenwand (24) hat, die, wenn kein Druck auf sie ausgeübt wird, einen Bereich (241) aufweist, der sich vom Boden des Kanals (16) weg schräg zur Mittelachse hin erstreckt und von einem Bereich (242) fortgesetzt wird, der sich schräg von der Mittelachse entfernt, dass man die Außenwand (18) durch Bördeln auf den Bereich (241) legt, der sich schräg zur Mittelachse hin erstreckt, indem man sie allmählich zu dieser hin umbiegt, und man hört auf, die Außenwand (18) umzubiegen, wenn sie der Form des Bereichs (241) entspricht, der sich schräg zur Mittelachse hin erstreckt, bevor sie auf diesen Bereich (241) Druck ausübt.

8. Verfahren nach Anspruch 7, **dadurch gekennzeichnet, dass** man, um die Außenwand (18) auf den Bereich (241) umzuklappen, der sich schräg zur Mittelachse hin erstreckt, die Außenwand (18) durch gyroskopisches Bördeln auf diesen Bereich (241) legt.

## Claims

1. Valve shutter designed to collaborate with an annular seat, comprising an annular framework (1) consisting of a sheet, the folded parts of which define an annular canal (16), and an annular seal (2) partially housed in this canal, this sheet extending, around a central axis, from an edge face (10) that forms the start of an interior wall (11) forming a neck designed to be slipped around a moving valve element and leading as far as another edge face (19) which forms the termination of an exterior wall (18) bordering the annular canal (16) and converging, towards this other edge face, in a way inclined towards the central axis, **characterized in that** the seal (2) is a moulded seal made of synthetic material having an exterior surface (24) comprising, when no stress is exerted on it, a region (241) extending away from the bottom of the canal (16) towards the central axis in an inclined manner, extended by a region (242) diverging from the central axis in an inclined manner, and **in that** the exterior wall of the framework (1) hugs, without penetrating the material of the seal and without exerting stress thereon but by means of a close fit, the shape of at least part of the said region (241), extending towards the central axis, of the seal (2).

2. Valve shutter according to Claim 1, **characterized in that** the seal (2) comprises a base surface (22) connected to the exterior surface (24) by a rounded region, and the framework (1) comprises cylindrical or approximately cylindrical portions and circular connecting rings comprising, from a first edge face (10), a portion (11) constituting the interior wall of the framework, a portion (15) extending in the opposite direction to the interior wall of the framework to constitute an interior wall of the canal (16), and a circular ring (17) extending externally with respect to the portion (15) constituting the interior wall of the canal to constitute the bottom of the canal, the exterior wall (18) of the canal being connected to the ring (17) by a fillet that hugs the shape of the said rounded region of the seal.

3. Valve shutter according to either one of Claims 1 and 2, **characterized in that** the framework (1) comprises, starting from an edge face (10), an approximately cylindrical first portion (11) constituting the interior wall (11) of the framework forming a neck, and a first circular shoulder ring (12) extending externally with respect to the first portion in a plane perpendicular to the central axis in order to connect thereto a second cylindrical portion (13) extending in the same direction as the first portion, the portions being connected to the ring via fillets.

4. Valve shutter according to any one of Claims 1 to 3, **characterized in that** the framework (1) comprises an edge face (19) approximately the entire surface of which hugs the shape of part of a region (242), diverging from the central axis in an inclined manner, of the exterior surface (24) of the seal (2) when no stress is exerted on this exterior surface.

5. Valve shutter according to any one of Claims 1 to 4, **characterized in that** the seal (2) comprises a region (243) extending towards the central axis in an inclined manner and connected to a free end surface (23) of the seal which is opposite to a base surface (22) thereof in contact against a circular ring (17) of the framework, frustoconically, when no stress is exerted on the exterior surface (24) of the seal.

6. Valve shutter according to any one of Claims 1 to 5, **characterized in that** the region (241) extending away from the bottom of the canal (16) towards the central axis in an inclined manner comprises at least one frustoconical part, of which the vertex angle of the cone frustum, when no stress is exerted on it, is about 60 degrees.

7. Method for manufacturing a valve shutter, **characterized in that** there is placed, in a sheet metal framework (1) comprising an annular canal (16) bordered by an approximately cylindrical exterior wall (18), a moulded seal (2) made of synthetic material exhibiting an exterior surface (24) which, when no stress is exerted on it, exhibits a region (241) extending away from the bottom of the canal (16) towards the central axis in an inclined manner, extended by a region (242) diverging from the central axis in an inclined manner, the exterior wall (18) is crimped onto the region (241) extending towards the central axis in an inclined manner by gradually knocking it towards the latter, and the exterior wall (18) stops being knocked when it hugs the shape of the region (241) extending towards the central axis in an inclined manner before it starts to exert stress on this region (241).

8. Method according to Claim 7, **characterized in that**, in order to knock the exterior wall (18) onto the region (241) extending towards the central axis in an inclined manner, the exterior wall (18) is gyroscopically crimped onto this region (241).
